# EUROPÄISCHE PATENTSCHRIFT

(11) **EP 2 622 031 B1**
(45) Veröffentlichungstag und Bekanntmachung des Hinweises auf die Patenterteilung: **28.08.2019**
(21) Anmeldenummer: 11727765.7
(22) Anmeldetag: 18.04.2011
(51) Int. Cl.: C09D 101/00, C09D 103/00, C04B 26/02, C04B 14/24, C04B 26/28

(54) **MULTIFUNKTIONALER PUTZ**
MULTIFUNCTIONAL PLASTER
ENDUIT MULTIFONCTIONNEL

(30) Priorität: 21.04.2010 DE 202010005960 U
(43) Veröffentlichungstag der Anmeldung: 07.08.2013
(73) Patentinhaber: S.A.C. Silent AG, 8460 Marthalen (CH)
(72) Erfinder: PORTMANN, Josef A., CH-6275 Ballwil (CH)
(74) Vertreter: Reb, Carina
(86) Internationale Anmeldenummer: PCT/IB2011/051670
(87) Internationale Veröffentlichungsnummer: WO 2011/132132

(56) Entgegenhaltungen:
- EP-A1- 0 781 732
- DE-A1- 2 423 618
- FR-A1- 2 930 256

## Beschreibung

Die vorliegende Erfindung betrifft einen multifunktionalen Putz, sowie zwei Verfahren zum Auftragen dieses multifunktionalen Putzes.

Moderne Putze müssen hinsichtlich ihrer Zusammensetzung und ihrer Eigenschaften einer Reihe von Anforderungen genügen. So müssen sie beispielsweise gute Verarbeitungseigenschaften für das Auftragen und Austrocknen aufweisen, sie müssen Brandschutzanforderungen erfüllen, bestimmten Rauheitsgraden entsprechen, aber auch Farbtreue und hygienische Eigenschaften erfüllen. Des Weiteren weisen moderne Putze gute Eigenschaften hinsichtlich Leitfähigkeit von Energie, Wärme oder Kälte bzw. Durchlassfähigkeit von Luft und Wasser bzw. Wasserdampf auf, sowie wünschenswerterweise auch gute Akustikeigenschaften, d.h. eine möglichst gute Schallabsorption oder/und eine möglichst gute Schalltransmission von der Innenraum-Oberfläche durch den Putz hindurch zu Trägerplatten, auf denen der Putz aufgetragen ist.

Die Patentschrift DE-C2-196 14 296 offenbart einen Putz bzw. eine Beschichtungsmasse mit einem körnigen Anteil, einem Bindemittel und einem Verdickungsmittel. Der körnige Anteil umfasst einen engkörnigen Hauptanteil mit einer Korngrössenabweichung von maximal ±50 %, in einem Anteil von 65 bis 98 Gew.-% sowie einen Feinanteil, dessen Korngrössen unter 0,1 mm liegen und in einem Anteil von maximal 10 Gew.-% vorliegen. Das Bindemittel bindet unter Wasserentzug und hat einen Feststoffanteil in einem Anteil von 1 bis 6 Gew.-%. Das Verdickungsmittel ist von einem Polysaccharid gebildet und liegt in einem Anteil von maximal 1 Gew.-% vor. Durch diese Zusammensetzung soll eine Vielzahl von durchgängigen luftdurchlässigen Poren begünstigt werden, die einen Schallabsorptionsgrad nach ISO 354-1985 mit einem statischen Absorptionsgrad von maximal 0.60 ergeben.

Herkömmliche Putze können weitere Nachteile aufweisen, wie beispielsweise eine Schattenbildung oder Fugenabzeichnungen, die deshalb entstehen, weil vorgefertigte bzw. oberflächenbehandelte Trägerplatten verwendet werden. Diese Trägerplatten müssen unter Umständen zugeschnitten oder/und verfugt werden, sodass sich ein Putzuntergrund mit unterschiedlichem Strömungsverhalten (Energie- und Feuchtigkeitstransmission) ergibt, weil die Oberflächenbehandlung an den Schnittkanten zerstört ist bzw. der Fugenmörtel andere Strömungseigenschaften aufweist. Die Fläche wird inhomogen. Diese Inhomogenität führt zu unterschiedlichem Strömungsverhalten, das wiederum zu der unerwünschten Schattenbildung vor allem im Fugenbereich führen kann.

Ein weiterer Nachteil herkömmlicher Putze kann die Tatsache darstellen, dass sie üblicherweise fertig angemischt zu dem Bauort lieferbar sind. Abgesehen davon, dass der Transport von leichteren Materialien grundsätzlich ökologischer als derjenige von schwereren ist - meist ist Wasser ab Werk beigemischt -, entfällt die Möglichkeit, vor Ort auf bestimmte bauliche Voraussetzungen oder spontane Kundenwünsche hinsichtlich Textur, Eigenschaften, Farbe des Putzes mit variier- und adaptierbaren Grundmischungsverhältnissen zu reagieren.

Die FR-2930256 offenbart eine Putzmischung, die ohne nähere und schlüssige Darstellung des Zusammenhanges zu verbesserten akustischen Eigenschaften, eine Basis-Zusammensetzung aus Wasser, Verdickungsmittel, Dispersionsmittel, Monogranulaten und Bindemittel offenbart. Weitere in dieser Patentanmeldung beschriebene Putzmischung-Varianten offenbaren darüber hinaus als weitere Komponenten noch Dispersionsmittel in Form von Ammonium-Polycarboxylat, Tensid, in Form von Diol, AntiSchaummittel, Verdickungsmittel in Form von Scleroglucan oder Xanthan, Granulat in Form von Calciumcarbonat oder abgeblättertem Silikat oder Glaskugeln, Fasern in Form von Polypropylen- oder Polyamid-Fasern, Pigmente in Form von Titandioxid, Bindemittel in Form von Styrene/Acryl-Latex, Lösungsmittel in Form von Glycolether, schweres Lösungsmittel in Form von Butylencarbonat und Biozid, in Form von Isothiazolinon.

Die Offenlegungsschrift DE-24 23 618-A1 wiederum offenbart eine Putzmischung, die kunstharzgebunden ist und Polymere, sprich Kunststoff enthält. Zur Erreichung einer verbesserten Luftschallabsorption wird einerseits beschrieben, es müsse so viel Weichmacher beigefügt werden, dass die Einfrier- bzw. Glastemperatur in einen Bereich von -20 bis +10 Grad Celsius gebracht wird. Andererseits soll die Korngröße der Körner von Titandioxid als Pigment und Quarz oder Calciumcarbonat als Granulat-Füllstoff 0,35 bis 1,5 mm betragen.

Die Aufgabe der vorliegenden Erfindung ist, einen multifunktionalen Putz bzw. eine Beschichtungsmasse zu stellen, dessen bzw. deren Akustikeigenschaften d.h.
Schallabsorptionsgrad nochmals verbessert ist, aber auch die sonstigen, oben erwähnten Nachteile weitestgehend vermeidet.

Die Lösung der Aufgabe besteht zunächst in der Zusammensetzung eines erfindungsgemässen multifunktionalen Putzes gemäß Anspruch 1 aus einer ersten Komponente in Form eines körnigen Trägermaterials, einer zweiten Komponente in Form von Granulaten und einer dritten Komponente in Form eines Bindemittels. Das Trägermaterial besteht vorzugsweise aus keramischen Mikrohohlkugeln oder expandierten Glashohlkugeln mit Luft- oder Vakuumeinschlüssen. Sie besitzen einen hohen Weissheitsgrad, weil sie vorzugsweise aus reinem Glas und nicht aus Recycling-Glas hergestellt sind. Die zweite Komponente, das Granulat, kann aus Marmor, Granit, Quarz, Speckstein, Vermiculit, Siliziumcarbid oder Graphit bestehen. Als Bindemittel kommen übliche Materialien wie Harze, Kleber, Polysaccharide, Stärke, Gelatine o.Ä. in Betracht.

Das Mischungsverhältnis zwischen dem Trägermaterial und dem Granulat liegt in einem Bereich von ca. 0.1:1 bis ca. 8:1, vorzugsweise bei ca. 4:1, sodass der erfindungsgemässe multifunktionale Putz beispielsweise für eine relativ dickschichtige Deckenapplikation nicht zu schwer wird.

Wie schon erwähnt, besteht das Trägermaterial eines erfindungsgemässen multifunktionalen Putzes aus expandierten Glashohlkugeln. Sie sind vorzugsweise gesiebt und somit bleibt der multifunktionale Putz frei von einem Feinanteil, der von diesen expandierten Glaskörnern herrührt. Die expandierten Glaskörner können kugel-, würfelförmig, tetra-, rhombo- oder polyedrisch ausgeformt sein. Weiterhin vorzugsweise können diese expandierten Glashohlkugeln gebrochen sein, beispielsweise durch ein Mahlverfahren. Somit weisen sie vorzugsweise eine möglichst hohe Sperrizität auf. Mit hoher Sperrizität ist im Folgenden gemeint, dass die prozentuale Abweichung eines kleinsten von einem grössten Aussendurchmesser des Glaskornes hoch ist. Sie liegt in einem Bereich von ca. 2.5 % bis ca. 75 %, vorzugsweise jedoch bei ca. 25 %. Auch Nanopartikel kommen in Betracht, deren Oberfläche künstlich durch Vertiefungen und Erhebungen vergrössert ist.

Die einzelnen Körnerpartikel der zweiten Komponente, des Granulats, können kleiner, annähernd gleich gross oder aber auch grösser als die einzelnen Körnerpartikel des Trägermaterials sein, sind jedoch ebenfalls durch eine Sperrizität gekennzeichnet, die in dem oben beschriebenen Bereich der Sperrizität der Körner des Trägermaterials liegt.

Die Folge der hohen Sperrizitäten der Körner des Trägermaterials und der Körner des Granulats, aber auch der Abwesenheit eines Feinanteils ist, dass beim Binden mit Hilfe des Bindemittels nur geringe Flächen jeweils eines Trägermaterial-Kornes und eines Granulat-Kornes oder jeweils zweier Trägermaterial-Körner oder jeweils zweier Granulat-Körner durch das Bindemittel gebundenen Kontakt bekommen und somit relativ grosse und gut ausgeprägte Luftkanäle (nicht nur im Putzmaterial eingeschlossene Poren ohne Kontakt zu den Oberflächen der aufgetragenen Putzschicht) in dem erfindungsgemässen multifunktionalen Putz entstehen. Solche, die gesamte Schicht des Putzes teilweise durchsetzenden Luftkanäle, verbessern die akustischen Eigenschaften des Putzes erheblich, aber auch seine Leitfähigkeit von Energie (beispielsweise Wärme/Kälte) oder Feuchtigkeit.

Des Weiteren ist es als optionale Ausgestaltungsvariante eines erfindungsgemässen multifunktionalen Putzes vorgesehen, dem Bindemittel ein oder mehrere Tenside oder Detergenzien oder auch Emulgatoren oder Kombinationen hiervon beizumengen, sodass sich die Oberflächenspannung beim Abbindungsvorgang mindert. Dadurch wird erreicht, dass auf das Bindemittel eine verbesserte Sogwirkung hin zu den Kontaktstellen entsteht, weg von der kontaktfreien Oberfläche eines jeweiligen Kornes. Dadurch wiederum vergrössern sich die erfindungsgemässen Luftkanäle.

Die bevorzugte Bindung durch das Bindemittel lediglich an den Kontaktstellen und die somit bevorzugte Entstehung von relativ grossen Luftkanälen, die nicht durch das Bindemittel verkleinert werden, kann weiterhin erfindungsgemäss dadurch begünstigt sein, indem die Trägermaterial-Körner und die Granulat-Körner jeweils mit einer Substanz vorbeschichtet sind. Diese beiden identischen oder aber auch unterschiedlichen Beschichtungs-Substanzen reagieren alleine für sich gesehen mit dem Bindemittel nicht oder nur schwach. An den Kontaktstellen hingegen, wo die Beschichtungs-Substanzen und das Bindemittel aufeinandertreffen, findet eine verstärkte oder überhaupt eine bindende chemische Reaktion statt. Das Bindemittel stellt somit einen chemischen Koreagens oder eine Initiatorsubstanz oder zumindest einen Reaktionsbeschleuniger für die Beschichtungs-Substanzen dar.

Grundsätzlich ist der gleiche Effekt erzielbar, indem die Trägermaterial-Körner und die Granulat-Körner nicht beschichtet sind und das Bindemittel einen chemischen Koreagens zu den jeweiligen, unterschiedlichen Materialien der Körner des Trägermaterials und der Körner des Granulats darstellt.

Die chemische Reaktion, die aufgrund des Koreagens an den Kontaktstellen der Trägermaterial-Körner mit den Granulat-Körnern stattfindet, erzeugt vorzugsweise nur an diesen Stellen eine Verbindungsstelle und kann organisch oder durch zwei Komponenten-Stoffe oder aber auch anorganisch erfolgen, indem beispielsweise eine erste Substanz ein Erdalkalimetalloxid oder -hydroxid oder Aluminiumoxid oder Aluminiumhydroxid und die zweite Substanz ein entsprechendes Carbonat, Sulfat oder Silikat eines anderen Erdalkalimetalles oder von Aluminium ist und alleine schon das Wasser aus dem Bindemittel die Entstehung eines entsprechenden Salzes an den Kontaktstellen entstehen lässt. Jedoch nicht nur das Wasser, sondern auch die Substanz des Bindemittels selbst kann die Reaktion auslösen oder beeinflussen. Das beigemengte Wasser oder aber auch sogenanntes Kristallwasser (kristallin gebundenes Wasser) bzw. die Substanz des Bindemittels reagiert nicht besonders weder mit der ersten, noch mit der zweiten Substanz, an den Kontaktstellen hingegen, nämlich dort, wo die physische Nähe einen Ionen- und Atomaustausch ermöglicht, erfolgt zumindest teilweise die Anlagerung einer relativ festen Salz- bzw. generell kristallinen Struktur, die wiederum ein Trägermaterial-Korn und ein Granulat-Korn miteinander verbindet.

Eine weitere erfinderische Massnahme, die ebenfalls die Verbesserung der Luftkanäle in einem erfindungsgemässen multifunktionalen Putz betrifft, ist das Auftragen einer ersten Schicht, das Austrocknen- bzw. Aushärtenlassen dieser ersten Schicht, das anschliessende partielle Abschleifen und Absaugen dieser ersten Schicht, gefolgt von dem Auftragen einer zweiten, dünneren Schicht auf die abgeschliffene Oberfläche. Es ist festgestellt worden, dass - beispielsweise bei einem Deckenputz - innerhalb der Putzschicht eine gravitationsbedingte Sedimentierung auftritt, die die erwünschten Luftkanäle im unteren Bereich der Putzschicht enger werden oder gar zum totalen Verschluss kommen lässt. Durch das Abschleifen dieser Sedimentierungsschicht und das Absaugen der Schleifrückstände werden die Luftkanäle zu der unteren Oberfläche der Putzschicht wieder geöffnet. Das Auftragen der zweiten, dünneren Schicht wird so sparsam vorgenommen, dass in dieser zweiten, dünneren Schicht keine substantielle Sedimentierung mehr stattfindet. Das Auftragen der zweiten, dünneren Schicht dient so gesehen lediglich ästhetischen Aspekten. Messungen haben ergeben, dass zwischen einem nicht abgeschliffenen, einmalig aufgetragenen Putz und einem abgeschliffenen Zweischichten-Putz - bei identischer Zusammensetzung der Putze - ein Unterschied im statischen oder dynamischen Schallabsorptionsgrad von annähernd 0.6 zu annähernd 0.8 vorliegt. Die Dicke der ersten Putzschicht liegt vorzugsweise in einem Bereich von 2-8 mm und beträgt vorzugsweise nach dem Abschleifen ca. 4 mm die Dicke der zweiten Putzschicht liegt vorzugsweise in einem Bereich von 1-3 mm und beträgt vorzugsweise ca. 2 mm.

Eine weitere Ausgestaltungsvariante eines erfindungsgemässen multifunktionalen Putzes sieht ein Bindemittel vor, das optional oder zusätzlich zu den bisherigen Eigenschaften bei Erwärmung aus einem festen bzw. annähernd festen Zustand in einen flüssigen Zustand übergeht. Nach Auftragen des Putzes, vorzugsweise, aber nicht zwingend, von dem Abschleifen und Absaugen gefolgt, wird mittels Wärmeaufbringung und weiterhin vorzugsweise mittels eines saugenden Vlieses überflüssiges Bindemittel aus dem Putz entfernt. Durch diese Massnahme kann ebenfalls erreicht werden, dass die Luftkanäle in dem Putz vergrössert werden und der Putz einerseits dadurch Schall besser absorbiert und andererseits durchlässiger bzw. leitfähiger wird. Die Wärmeaufbringung bewegt sich in einem Bereich von annähernd 50-150 Grad Celsius und erfolgt beispielsweise mittels Hitzestrahlern, Infrarotlampen oder Heizdecken.

Auch eine Energieaufbringung in Form von Röntgenstrahlen, UV-Licht oder Mikrowellen kommt in Betracht.

Gemäss einer weiteren Ausgestaltungsvariante eines erfindungsgemässen multifunktionalen Putzes wird eine Verbesserung der Porosität durch einen Aufschäumer, beispielsweise Bicarbonat, erreicht. Auch Ammoniumhydrogencarbonat [NH₄HCO₃] kommt in Betracht, das sich bei einer Erwärmung auf ca. 60 Grad in sich verflüchtigendes Ammoniak [NH₃], Kohlendioxid [CO₂] und Wasser [H₂O] zersetzt. Eine ähnliche Wirkung kann durch Zellulose-, Carbon- oder Keratinfasern (beispielsweise Hühnerfedern) erreicht werden, die sich unter der Einwirkung des Wassers aufrichten bzw. quellen, aber bei der anschliessenden Austrocknung bzw. beim anschliessenden Abbindevorgang des Putzes auf ihr ursprüngliches Maß zurückschrumpfen und somit wiederum Zwischenräume freigeben. Zur Erfüllung von Brandvorschriften können die Fasern mit einem Flammschutzmittel behandelt sein.

Es kommt des Weiteren, sei es zur Verbesserung der Brandschutzeigenschaften oder zur Verbesserung der Verarbeitungseigenschaften eine Beimischung von Aluminiumhydroxid [Al(OH)₃], sowie von Polyol in Betracht. Letzteres hat polare Eigenschaften und führt zu einer besseren Homogenität und Vernetzung. Dadurch wiederum ist der Putz besser und länger abtaloschierbar.

Eine weitere Möglichkeit, die schallabsorbierenden Luftkanäle zu verbessern, ist das "Durchpusten" mittels Druckluft oder aber auch das Sandstrahlen des gebundenen Putzes mit sehr feinen Sandpartikeln. Der Putz ist hierbei vorzugsweise auf luftdurchlässigen, offenporigen Trägerplatten aufgebracht, sodass die Druckluft oder die feinen Sandpartikel unerwünschte Partikel oder Bindemittelanteile, die die Luftkanäle verstopfen, von diesen befreit.

Des Weiteren kommt auch eine mechanische Verarbeitung des aufgetragenen Putzes mittels einer Nadelwalze oder eines Stempelkissens mit Nadeln zur Verbesserung der Porosität in Betracht.

Ein erfindungsgemässer multifunktionaler Putz ist vorzugsweise Bestandteil eines modularen Sets, das einerseits Folgendes umfasst: Eine erste Komponente bzw. ein erstes Gebinde mit dem Trägermaterial und eine zweite Komponente bzw. ein zweites Gebinde mit dem Granulat. Das Bindemittel ist vorzugsweise auf Wasserbasis und kann mindestens einem der beiden Gebinde bereits beigemischt sein, aber auch separat lieferbar sein. Jedenfalls ist es vorgesehen, durch Mischung der Inhalte der beiden Gebinde und unter Hinzugabe von Wasser erst am Bauort den erfindungsgemässen multifunktionalen Putz im gewünschten Mischungsverhältnis anzumischen und vorzugsweise auf die Wände oder Decken aufzuspritzen.

Andererseits umfasst das modulare Set vorzugsweise Trägerplatten, die zum Einen auf die Strömungseigenschaften des erfindungsgemässen multifunktionalen Putzes abgestimmt sind, zum Anderen jedoch auf Stoß montierbar sind, sodass die Notwendigkeit eines Verfugens entfällt. Für Letzteres können die Trägerplatten vorzugsweise mit einer überlappenden Anschlusskante oder mit Nut und Feder ausgestattet sein.

Einem erfindungsgemässen multifunktionalen Putz oder vorzugsweise dem Bindemittel kann mindestens ein Fungizid zur Vermeidung von Schimmelbildung und Bakterienwachstum beigemischt sein. Auch eine Beimengung oder Beschichtung der Körner mit Nanosilber kommt hierfür in Betracht.

Des Weiteren kommt eine Retard-Wirkung des Fungizids erfindungsgemäss in Betracht, die verspätet die Treibwirkung von beigemengten Hefen, allenfalls durch Stärkemittel verstärkt, unterbindet.

Die expandierten Glaskörper, die vorzugsweise das Trägermaterial bilden, ergeben einen hohen Weißheitsgrad des erfindungsgemässen multifunktionalen Putzes. Falls eine Einfärbung des Putzes erwünscht ist, wird weiterhin erfindungsgemäss vorzugsweise auf die herkömmlicherweise übliche Beigabe von Farbpigmenten verzichtet, die sich wiederum unerwünschterweise in den Luftkanälen ansetzen würden. Die Einfärbung eines erfindungsgemässen multifunktionalen Putzes erfolgt stattdessen durch die entsprechende Farbauswahl der Granulate.

Des Weiteren ist es möglich, dem Bindemittel ein übliches Verdickungsmittel, Latex oder Xanthanat oder Xanthogenath beizugeben, sodass die Viskosität beim Verarbeiten verbessert wird, aber auch eine nachträgliche Spannungs- und Rissbildung im ausgehärteten Putz vermieden wird.

Ein erfindungsgemässer multifunktionaler Putz bringt folgende Vorteile:
- Die Zusammensetzung des Putzes besteht aus wenigen Komponenten, die vor Ort nach Bedarf gemischt werden können.
- Durch die Beigabe von Wasser erst am Bauort ist die zum Bauort transportierte Ware leichter und somit der Transport ökologischer.
- Durch die Verwendung von abgestimmten Trägerplatten, die auf Stoß montierbar sind, entfällt die Notwendigkeit des Verfugens des Putzuntergrundes.
- Der Putz bietet eine hohe Schallabsorption.
- Der Putz bietet eine hohe Leitfähigkeit bzw. gute Strömungseigenschaften.
- Der Putz bietet einen hohen Weißheitsgrad.
- Eine Einfärbung durch Farbpigmente und allfällige Ungenauigkeiten hierdurch entfallen durch die farbliche Abstimmung des Granulats.
- Es findet eine Wertschöpfungs-Verlagerung hin zum Kunden statt.

Die beschriebenen unterschiedlichen Ausgestaltungsvarianten eines erfindungsgemässen multifunktionalen Putzes sind miteinander kombinierbar. So kann beispielsweise - je nach eventuellen baulichen Voraussetzungen - eine Basisvariante des erfindungsgemässen Putzes mit gesiebten und gebrochenen Trägermaterial-Körnern mit Tensiden oder/und mit der beschriebenen Vorbeschichtung sowie dem beschriebenen Koreagens kombiniert sein. Diese Ausgestaltungsvarianten wiederum können mit einem schmelzenden Bindemittel kombiniert sein oder/und dem Aufschäumer, oder/und den Zellulose-, Carbon- oder Keratinfasern, oder/und dem Aluminiumhydroxid, oder/und dem Polyol, oder/und dem Fungizid, oder/und dem Nanosilber, oder/und dem Verdickungsmittel. Auch die beschriebenen Verfahren sind kombinierbar, d.h., dass zusätzlich zu dem teilweisen Abschleifen der ersten Schicht und Auftragen einer zweiten Schicht einzeln oder nochmals kombiniert die beschriebenen Verfahren mittels Wärmeapplikation, oder/und Druckluft, oder/und Sandstrahlen, oder/und mechanischer Bearbeitung anwendbar sind.

Weitere oder vorteilhafte Ausgestaltungen eines erfindungsgemässen multifunktionalen Putzes bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht massstabsgetreu, auch in der Relation der einzelnen Bestandteile zueinander nicht. Gleiche Bezugszeichen bedeuten gleiche Bauteile, Bezugszeichen mit unterschiedlichen Indices geben funktionsgleiche oder ähnliche Bauteile an.

Es zeigen dabei
Fig. 1 eine schematische Schnittdarstellung eines Trägermaterial-Kornes, das vorzugsweise für einen erfindungsgemässen Putz Verwendung findet;
Fig. 2 eine schematische Darstellung einer ersten Ausgestaltungsvariante eines aufgetragenen erfindungsgemässen multifunktionalen Putzes;
Fig. 3a eine schematische Darstellung eines
erfindungsgemässen multifunktionalen Putzes, der in lediglich einer Schicht aufgetragen worden ist;
Fig. 3b eine schematische Darstellung des multifunktionalen Putzes aus der Fig. 3a nach einem Abschleif- und Absaugvorgang;
Fig. 3c eine schematische Darstellung des multifunktionalen Putzes aus der Fig. 3b, der um eine zweite, dünnere Putzschicht ergänzt worden ist;
Fig. 4a eine schematische Darstellung einer weiteren Ausgestaltungsvariante eines erfindungsgemässen multifunktionalen Putzes mit einem schmelzbaren Bindemittel;
Fig. 4b eine schematische Darstellung der Wärmeaufbringung auf den multifunktionalen Putz gemäss der Fig. 4a;
Fig. 4c eine schematische Darstellung des geschmolzenen und verbliebenen Bindemittels in dem multifunktionalen Putz gemäss den Figuren 4a und 4b und
Fig. 5 ein Schaubild des gemessenen Schallabsorptionsgrades bei einem erfindungsgemässen Putz.

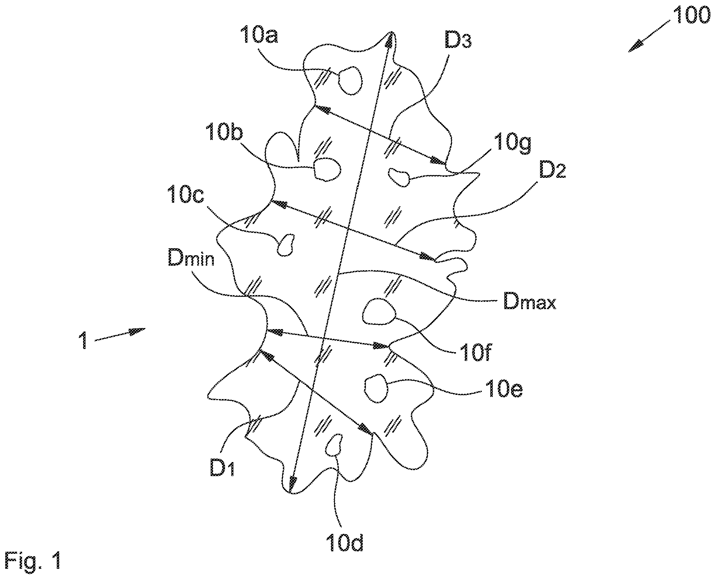

In der Fig. 1 ist schematisch und geschnitten ein Trägermaterial-Korn 1 dargestellt, wie es vorzugsweise für einen erfindungsgemässen Putz 100 als erste Komponente Verwendung findet. Das Trägermaterial-Korn 1 besteht vorzugsweise aus expandiertem Glas und hat Luft- bzw. Vakuumeinschlüsse 10a-10g. Das Trägermaterial-Korn 1 hat des Weiteren einen grössten Aussendurchmesser Dₘₐₓ und einen kleinsten Aussendurchmesser Dₘᵢₙ, sowie weitere Durchmesser D₁-D₃. Als Ausdruck der Sperrizität des Trägermaterial-Kornes 1 liegen mindestens zwei der Durchmesser Dₘᵢₙ und D₁-D₃ in einem Bereich von 2.5 % bis maximal 75 %, vorzugsweise bei ca. 25 % des Betrages von Dₘₐₓ.

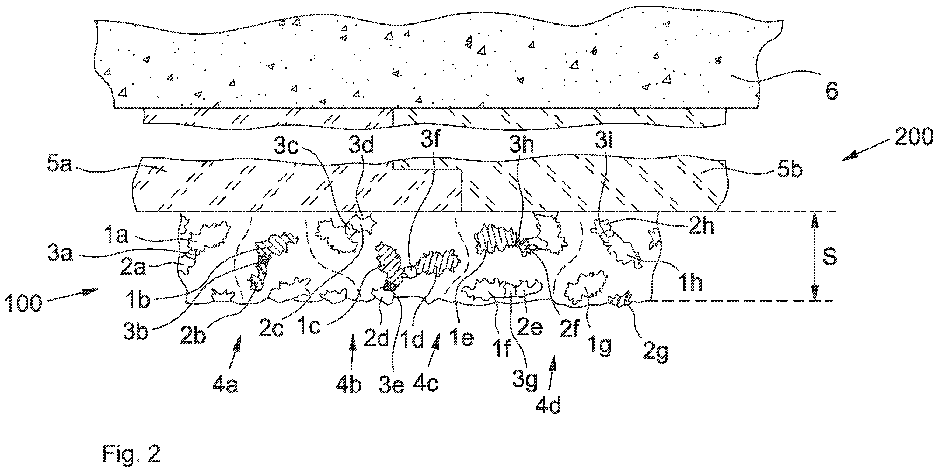

Die Fig. 2 zeigt eine schematische Darstellung einer ersten Ausgestaltungsvariante des erfindungsgemässen multifunktionalen Putzes 100, der auf zwei Trägerplatten 5a und 5b aufgetragen ist, die überlappend auf Stoß an einer Decke 6 montiert sind. Die Trägerplatten 5a und 5b können auch abgehängt an der Decke 6 montiert sein. Der multifunktionale Putz 100 umfasst Trägermaterial-Körner 1a-1h, sowie Granulat-Körner 2a-2h, die jeweils nur teilweise geschnitten dargestellt sind, weil manche tiefer als die Schnittebene liegen. Es ist erkennbar, dass die Trägermaterial-Körner 1a-1h und die etwas kleineren Granulat-Körner 2a-2h durch ein vorheriges Mahlverfahren gebrochen sind und somit eine hohe Sperrizität aufweisen. Manche Trägermaterial-Körner 1a-1h und manche Granulat-Körner 2a-2h sind miteinander oder jeweils untereinander oder mit der Unterseite der Trägerplatten 5a und 5b durch eine Bindemittel-Kontaktstelle 3a-3i verbunden. Zwischen den so angeordneten bzw. gebundenen Trägermaterial-Körnern 1a-1h und den Granulat-Körnern 2a-2h verbleiben Luftkanäle 4a-4d, die teilweise eine gesamte Schichtdicke S des multifunktionalen Putzes 100 durchsetzen.

Die auf Stoß montierten Trägerplatten 5a und 5b und die einzelnen Bestandteile des multifunktionalen Putzes 100, sprich das Trägermaterial 1a-1h, das Granulat 2a-2h und das Bindemittel 3a-3i, sind vorzugsweise als Bestandteile eines modularen Sets 200 separat an den Bauort lieferbar und an diesem zusammensetzbar.

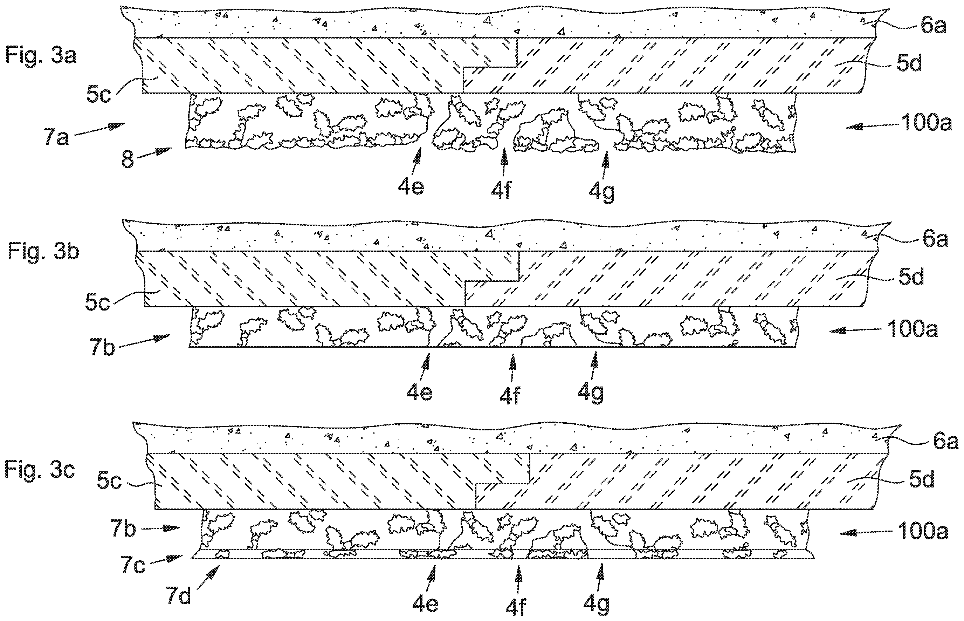

Die Fig. 3a zeigt auf Trägerplatten 5c und 5d, die ebenfalls überlappend auf Stoß an einer Decke 6a montiert sind, einen multifunktionalen Putz 100a in Form einer ersten Putzschicht 7a. Nach dem Auftragen und Abtrocknen dieser ersten Putzschicht 7a hat sich eine Sedimentierung 8 gebildet, die beispielhaft dargestellte Luftkanäle 4e-4g verstopft.

In der Fig. 3b ist dargestellt, dass die erste Putzschicht 7a aus der Fig. 3a durch Abschleifen in eine dünnere, abgeschliffene Putzschicht 7b des multifunktionalen Putzes 100a verwandelt worden ist. Der Vorgang des Abschleifens ist vorzugsweise von einem Absaugen der Schleifrückstände gefolgt. Die Luftkanäle 4e-4g sind wieder offen.

Die Fig. 3c hingegen zeigt, dass durch das Aufbringen einer zweiten, dünneren Putzschicht 7c auf die abgeschliffene Putzschicht 7b eine zweifach verputzte Putzschicht 7d entstanden ist, die sich dadurch auszeichnet, dass sich lediglich der Luftkanal 4e durch das Auftragen der zweiten Putzschicht 7c erneut verschlossen hat, die Luftkanäle 4f und 4g jedoch offen geblieben sind. Die überwiegende Mehrheit der durch das Abschleifen und Absaugen geöffneten Luftkanäle ist offen geblieben. Auf diese Weise ist durch das dargestellte Verfahren ein multifunktionaler Putz 100a mit besonders guten Leitfähigkeits- und Akustikeigenschaften entstanden.

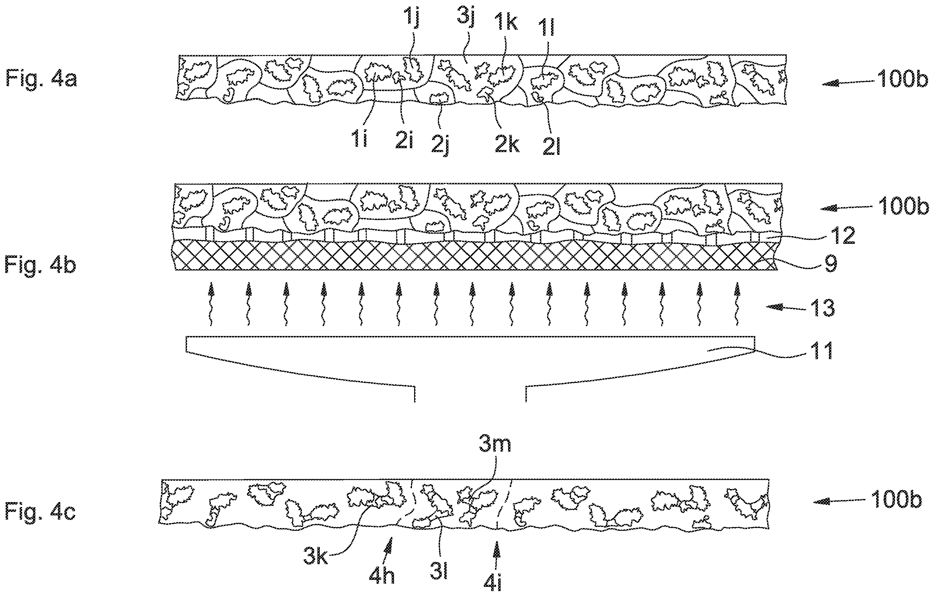

Die Fig. 4a zeigt einen multifunktionalen Putz 100b, dem ein durch Aufbringung von Wärme verflüssigbares Bindemittel 3j beigemengt ist, in dem Trägermaterial-Körner 1i-1l und Granulat-Körner 2i-2l gebunden sind.

In der Fig. 4b ist schematisch dargestellt, wie eine Strahlung 13 mittels einer Strahlungsquelle 11 - beispielsweise Wärme mittels einer Infrarotlampe - auf ein saugendes Vlies 9 aufgebracht wird, das an der Unterseite des multifunktionalen Putzes 100b beispielsweise mittels einer porösen Klebeschicht 12 angeklebt worden ist. Das schmelzbare Bindemittel 3j verflüssigt sich und wird durch die Poren der porösen Klebeschicht 12 von dem saugenden Vlies 9 aufgesogen.

Die Fig. 4c zeigt das Resultat des angewendeten Verfahrens, nämlich den multifunktionalen Putz 100b, bei dem sich das Bindemittel 3j auf wenige Bindemittel-Kontaktstellen 3k-3m reduziert hat und Luftkanäle 4h und 4i freigegeben hat.

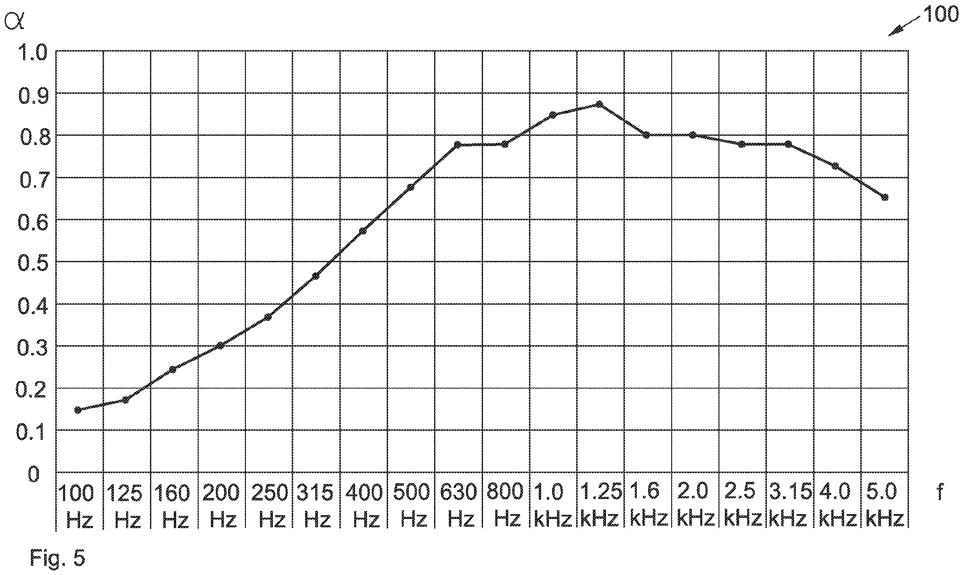

Die Fig. 5 zeigt ein Schaubild der Messwerte eines erfindungsgemässen multifunktionalen Putzes 100, der beispielhaft auf einer Trägerplatte in Form von 40 mm dicker Steinwollplatte aufgetragen worden ist und senkrecht beschallt wurde. Auf der X-Achse sind die applizierten Schallfrequenzen f in Hertz bzw. Kilohertz dargestellt und auf der Y-Achse die gemessenen Schallabsorptions-Werte α.

In dem menschlichen Stimmenfrequenzband zwischen 400 Hertz und 2 Kilohertz, das insbesondere für Büroräume relevant ist, weist ein erfindungsgemässer multifunktionaler Putz 100 gute Schallabsorptions-Werte α zwischen 0.55 und 0.88 auf. Eine statische oder dynamische Schallabsorptionsmessung ergibt keine signifikant unterschiedlichen Messergebnisse.

### Bezugszeichenliste

- 1, 1a-1l -: Trägermaterial, Trägermaterial-Korn
- 2a-2l -: Granulat, Granulat-Korn
- 3a-3m -: Bindemittel, Bindemittel-Kontaktstelle
- 4a-4i -: Luftkanal
- 5a-5d -: Trägerplatte
- 6, 6a -: Decke, Plafond
- 7a -: erste Putzschicht
- 7b -: abgeschliffene Putzschicht
- 7c -: zweite Putzschicht
- 7d -: zweifach verputzte Putzschicht
- 8 -: Sedimentierung
- 9 -: saugendes Vlies
- 10a-10g -: Luft- bzw. Vakuumeinschluss
- 11 -: Infrarotlampe, Wärmequelle, Strahlungsquelle
- 12 -: poröse Klebeschicht
- 13 -: Strahlung

- 100, 100a, 100b -: multifunktionaler Putz
- 200 -: modulares Set

- α -: Schallabsorptions-Wert
- f -: Schallfrequenz
- S -: Schichtdicke von 100

## Patentansprüche

1. Multifunktionaler Putz (100, 100a, 100b), wobei der Putz (100, 100a, 100b) folgende Komponenten umfasst
- eine erste Komponente in Form eines Trägermaterials (1, 1a-1l) bestehend aus einzelnen Trägermaterial-Körnern (1, 1a-1l) aus expandierten Glashohlkugeln mit Luft- oder Vakuumeinschlüssen (10a-10g) oder keramischen Mikrohohlkugeln mit Luft- oder Vakuumeinschlüssen (10a-10g),
- eine zweite Komponente in Form von Granulat (2a-2l) aus Marmor, Granit, Quarz, Speckstein, Vermiculit, Siliziumcarbid oder Graphit,
- eine dritte Komponente in Form eines Bindemittels (3a-3m) in Form von Harz, Kleber, Polysacchariden, Stärke oder Gelatine und wobei das Mischungsverhältnis zwischen dem Trägermaterial (1, 1a-1l) und dem Granulat (2a-2l) in einem Bereich von 0.1:1 bis 8:1 liegt, vorzugsweise jedoch ca. 4:1 beträgt und wobei die prozentuale Abweichung eines kleinsten von einem größten Außendurchmesser des Trägermaterial-Kornes (1, 1a-1l) und des Granulat-Kornes (2a-2l) in einem Bereich von 2.5 % bis 75 % liegt, vorzugsweise jedoch 25 % beträgt, sodass beim Binden des Trägermaterials (1, 1a-1l) mit dem Granulat (2a-2l) Luftkanäle (4a-4i) übrigbleiben.

2. Putz (100, 100a, 100b) nach Anspruch 1, **dadurch gekennzeichnet, dass** das Trägermaterial (1, 1a-1l) gesiebt ist und somit keinen Feinanteil aufweist.

3. Putz (100a) nach einem der vorhergehenden Ansprüche, **dadurch gekennzeichnet, dass** das Bindemittel (3j) mittels Strahlung (13) einer Strahlungsquelle (11) verflüssigbar ist.

4. Putz (100, 100a, 100b) nach einem der vorhergehenden Ansprüche, **dadurch gekennzeichnet, dass** dem Bindemittel (3a-3m), oder/und dem Trägermaterial (1, 1a-1l) oder/und dem Granulat (2-21) ein Aufschäumer beigemengt ist.

5. Putz (100, 100a, 100b) nach einem der vorhergehenden Ansprüche, **dadurch gekennzeichnet, dass** dem Bindemittel (3a-3m), oder/und dem Trägermaterial (1, 1a-1l) oder/und dem Granulat (2-21) Zellulosefasern beigemengt sind.

6. Putz (100, 100a, 100b) nach einem der vorhergehenden Ansprüche, **dadurch gekennzeichnet, dass** dem Bindemittel (3a-3m), oder/und dem Trägermaterial (1, 1a-1l) oder/und dem Granulat (2-21) Aluminiumhydroxid beigemengt ist.

7. Putz (100, 100a, 100b) nach einem der vorhergehenden Ansprüche, **dadurch gekennzeichnet, dass** dem Bindemittel (3a-3m), oder/und dem Trägermaterial (1, 1a-1l) oder/und dem Granulat (2-2l) Polyol beigemengt ist.

8. Putz (100, 100a, 100b) nach einem der vorhergehenden Ansprüche, **dadurch gekennzeichnet, dass** dem Bindemittel (3a-3m), oder/und dem Trägermaterial (1, 1a-1l) oder/und dem Granulat (2-21) ein Fungizid beigemengt ist.

9. Putz (100, 100a, 100b) nach einem der vorhergehenden Ansprüche, **dadurch gekennzeichnet, dass** dem Bindemittel (3a-3m), oder/und dem Trägermaterial (1, 1a-1l) oder/und dem Granulat (2-21) Nanosilber-Partikel beigemengt sind.

10. Putz (100, 100a, 100b) nach einem der vorhergehenden Ansprüche, **dadurch gekennzeichnet, dass** dem Bindemittel (3a-3m), oder/und dem Trägermaterial (1, 1a-1l) oder/und dem Granulat (2-21) ein Verdickungsmittel beigemengt ist.

11. Putz (100, 100a, 100b) nach einem der vorhergehenden Ansprüche, **dadurch gekennzeichnet, dass** eine Einfärbung des Putzes (100, 100a, 100b) durch die farbliche Auswahl des Granulats (2a-2l) erfolgt.

12. Verfahren zum Aufbringen des Putzes (100, 100a, 100b) nach einem der vorhergehenden Ansprüche 1-11, auf einen Untergrund in Form von überlappend auf Stoß montierten Trägerplatten (5a-5d), **dadurch gekennzeichnet, dass** folgende Verfahrensschritte ausgeführt werden:
a) Auftragen einer ersten Putzschicht (7a);
b) Abschleifen und Absaugen einer Sedimentierung (8) der ersten Putzschicht (7a);
c) Auftragen auf eine abgeschliffene Putzschicht (7b) einer zweiten, dünneren Putzschicht (7c).

13. Verfahren zum Aufbringen des Putzes (100, 100a, 100b) nach einem der vorhergehenden Ansprüche 3-11, auf einen Untergrund in Form von überlappend auf Stoß montierten Trägerplatten (5a-5d), **dadurch gekennzeichnet, dass** folgende Verfahrensschritte ausgeführt werden:
a) Auftragen eines Putzes (100b);
b) Ankleben eines saugenden Vlieses (9) mittels einer porösen Klebeschicht (12) an dem Putz (100b);
c) Aufbringen einer Strahlung (13) mittels einer Strahlungsquelle (11);
d) Entfernen der Strahlungsquelle (11) und des saugenden Vlieses (9).

## Claims

1. Multifunctional plaster (100, 100a, 100b), wherein the plaster (100, 100a, 100b) comprises the following components
- a first component in the form of a carrier material (1, 1a-1l) consisting of singular carrier material grains (1, 1a-1l) of expanded glass hollow spheres with air or vacuum inclusions (10a-10g) or ceramic micro hollow spheres with air or vacuum inclusions (10a-10g),
- a second component in the form of granules (2a-21) of marble, granite, quartz, soapstone, vermiculite, silicon carbide or graphite,
- a third component in the form of a binding agent (3a-3m) in the form of resin, adhesive, polysaccharides, starch or gelatin and wherein the mixing ratio between the carrier material (1, 1a-1l) and the granules (2a-21) is in a range from 0.1:1 to 8:1, but preferably about 4:1
and wherein the percentage deviation from the smallest outer to the largest outer diameter of the carrier material grain (1, 1a-1l) and the granule grain (2a-2l) is in a range of 2.5 % to 75 %, but preferably 25 %, so that when bonding the carrier material (1, 1a-1l) with the granule (2a-2l), air channels (4a-4i) remain in place.

2. Plaster (100, 100a, 100b) according to claim 1, **characterized in that** the carrier material (1, 1a-1l) is sieved and thus has no fine content.

3. Plaster (100a) according to one of the preceding claims, **characterized in that** the binding agent (3j) can be liquefied by means of radiation (13) from a radiation source (11).

4. Plaster (100, 100a, 100b) according to one of the preceding claims, **characterized in that** a foaming agent is added to the binding agent (3a-3m) or/and to the carrier material (1, 1a-1l) or/and to the granules (2-2l).

5. Plaster (100, 100a, 100b) according to one of the preceding claims, **characterized in that** cellulose fibres are added to the binding agent (3a-3m) or/and to the carrier material (1, 1a-1l) or/and to the granulate (2-2l).

6. Plaster (100, 100a, 100b) according to one of the preceding claims, **characterized in that** aluminium hydroxide is added to the binding agent (3a-3m) or/and to the carrier material (1, 1a-1l) or/and to the granules (2-2l).

7. Plaster (100, 100a, 100b) according to one of the preceding claims, **characterized in that** polyol is added to the binding agent (3a-3m) or/and to the carrier material (1, 1a-1l) or/and to the granules (2-2l).

8. Plaster (100, 100a, 100b) according to one of the preceding claims, **characterized in that** a fungicide is added to the binding agent (3a-3m) or/and to the carrier material (1, 1a-1l) or/and to the granules (2-2l).

9. Plaster (100, 100a, 100b) according to one of the preceding claims, **characterized in that** nanosilver particles are added to the binding agent (3a-3m) or/and to the carrier material (1, 1a-1l) or/and to the granules (2-2l).

10. Plaster (100, 100a, 100b) according to one of the preceding claims, **characterized in that** a thickening agent is added to the binding agent (3a-3m) or/and to the carrier material (1, 1a-1l) or/and to the granules (2-2l).

11. Plaster (100, 100a, 100b) according to one of the preceding claims, **characterized in that** the plaster (100, 100a, 100b) is coloured by the colour selection of the granules (2a-2l).

12. Procedure for applying the plaster (100, 100a, 100b) according to one of the preceding claims 1-11, to a substrate in the form of overlapping support plates (5a-5d) mounted edge-to-edge, **characterized in that** the following procedural steps are carried out:
a) Applying of a first plaster layer (7a);
b) Abrading and sucking off a sedimentation (8) of the first plaster layer (7a);
c) Applying a second, thinner plaster layer (7c) to a sanded-off plaster layer (7b).

13. Procedure for applying the plaster (100, 100a, 100b) according to one of the preceding claims 3-11, to a substrate in the form of overlapping carrier plates (5a-5d) mounted edge-to-edge, **characterized in that** the following procedure steps are carried out:
a) Applying of a plaster (100b);
b) Adhering an absorbent fleece (9) to the plaster (100b) by means of a porous adhesive layer (12);
c) Applying of radiation (13) by means of a radiation source (11);
d) Removing the radiation source (11) and the absorbent fleece (9).

## Revendications

1. Plâtre multifonctionnel (100, 100a, 100b), dans lequel le plâtre (100, 100a, 100b) comprend les composants suivants
- un premier composant sous la forme d'un matériau support (1, 1a-1l) constitué de grains uniques de matériau support (1, 1a-1l) de sphères creuses en verre expansé avec des inclusions d'air ou de vide (10a-10g) ou de microsphères creuses en céramique avec des inclusions d'air ou de vide (10a-10g),
- un deuxième composant sous forme de granulat (2a-2l) de marbre, granit, quartz, pierre ollaire, vermiculite, carbure de silicium ou graphite,
- un troisième composant sous la forme d'un liant (3a-3m) sous forme de résine, adhésif, polysaccharides, amidon ou gélatine et dans lequel le rapport de mélange entre le matériau support (1, 1a-1l) et le granulat (2a-2l) est compris entre 0,1:1 et 8:1, mais de préférence environ 4:1
et dans lequel l'écart en pourcentage d'un plus petit par rapport à un plus grand diamètre extérieur du grain de matériau support (1, 1a-1l) et du grain de granulat (2a-2l) est compris entre 2,5 % et 75 %, mais de préférence 25 %, de sorte que lors de la liaison du matériau support (1, 1a-1l) avec le granulat (2a-2l) restent en place des conduits d'air (4a-4i).

2. Plâtre (100, 100a, 100b) selon la revendication 1, **caractérisé en ce que** le matériau support (1, 1a-1l) est tamisé et ne présente donc pas de teneur en fines.

3. Plâtre (100a) selon l'une des revendications précédentes, **caractérisé en ce que** le liant (3j) peut être liquéfié au moyen d'un rayonnement (13) d'une source de rayonnement (11).

4. Plâtre (100, 100a, 100b) selon l'une des revendications précédentes, **caractérisé en ce qu'**au liant (3a-3m) ou/et au matériau support (1, 1a-1l) ou/et au granulat (2-2l) est ajouté un agent moussant.

5. Plâtre (100, 100a, 100b) selon l'une des revendications précédentes, **caractérisé en ce qu'**au liant (3a-3m) ou/et au matériau support (1, 1a-1l) ou/et au granulat (2-2l) sont ajoutées des fibres de cellulose.

6. Plâtre (100, 100a, 100b) selon l'une des revendications précédentes, **caractérisé en ce qu'**au liant (3a-3m) ou/et au matériau support (1, 1a-1l) ou/et au granulat (2-2l) est ajouté de l'hydroxyde d'aluminium.

7. Plâtre (100, 100a, 100b) selon l'une des revendications précédentes, **caractérisé en ce qu'**au liant (3a-3m) ou/et au matériau support (1, 1a-1l) ou/et au granulat (2-2l) est ajouté du polyol.

8. Plâtre (100, 100a, 100b) selon l'une des revendications précédentes, **caractérisé en ce qu'**au liant (3a-3m) ou/et au matériau support (1, 1a-1l) ou/et au granulat (2-2l) est ajouté un fongicide.

9. Plâtre (100, 100a, 100b) selon l'une des revendications précédentes, **caractérisé en ce qu'**au liant (3a-3m) ou/et au matériau support (1, 1a-1l) ou/et au granulat (2-2l) sont ajoutées des particules de nano-argent.

10. Plâtre (100, 100a, 100b) selon l'une des revendications précédentes, **caractérisé en ce qu'**au liant (3a-3m) ou/et au matériau support (1, 1a-1l) ou/et au granulat (2-2l) est ajouté un agent épaississant.

11. Plâtre (100, 100a, 100b) selon l'une des revendications précédentes, **caractérisé en ce qu'**une coloration du plâtre (100, 100a, 100b) résulte par le choix de la couleur du granulat (2a-2l).

12. Procédé d'application du plâtre (100, 100a, 100b) selon l'une des revendications précédentes 1-11 sur un substrat sous forme de plaques de support (5a-5d) montées bout à bout qui se chevauchent, **caractérisé en ce que** les étapes suivantes du procédé sont effectuées:
a) Application d'une première couche de plâtre (7a);
b) Abrasion et aspiration d'une sédimentation (8) de la première couche de plâtre (7a);
c) Application d'une deuxième couche de plâtre plus mince (7c) sur une couche de plâtre poncé (7b).

13. Procédé d'application du plâtre (100, 100a, 100b) selon l'une des revendications précédentes 3-11 sur un substrat sous forme de plaques de support (5a-5d) montées bout à bout qui se chevauchent, **caractérisé en ce que** les étapes de procédé suivantes sont effectuées:
a) Application d'un plâtre (100b);
b) Encollage d'un non-tissé absorbant (9) sur le plâtre (100b) au moyen d'une couche adhésive poreuse (12);
c) Application d'un rayonnement (13) au moyen d'une source de rayonnement (11);
d) Élimination de la source de rayonnement (11) et du non-tissé absorbant (9).
